# EUROPÄISCHE PATENTSCHRIFT

(11) **EP 1 105 773 B1**
(45) Veröffentlichungstag und Bekanntmachung des Hinweises auf die Patenterteilung: **20.03.2002**
(21) Anmeldenummer: 00940174.6
(22) Anmeldetag: 05.05.2000
(51) Int. Cl.: G02F 1/167

(54) **VERBUNDFOLIEN MIT ELEKTRISCH SCHALTBAREN OPTISCHEN EIGENSCHAFTEN AUS LICHTSTREUENDEN TRÄGERMATERIALIEN**
COMPOSITE SHEETS WITH ELECTRICALLY SWITCHABLE OPTICAL PROPERTIES MADE OF LIGHT-SCATTERING BASE MATERIAL
FEUILLES COMPOSITES A PROPRIETES OPTIQUES COMMUTABLES ELECTRIQUEMENT EN MATERIAUX SUPPORTS DIFFUSANT LA LUMIERE

(30) Priorität: 16.06.1999 DE 19927359
(43) Veröffentlichungstag der Anmeldung: 13.06.2001
(73) Patentinhaber: Creavis Gesellschaft für Technologie und Innovation mbH, 45772 Marl (DE)
(72) Erfinder: SCHMIDT, Friedrich, Georg, D-45721 Haltern (DE)
(86) Internationale Anmeldenummer: DE0001455
(87) Internationale Veröffentlichungsnummer: WO0077571

(56) Entgegenhaltungen:
- WO-A-99/56171
- US-A- 5 699 097
- PATENT ABSTRACTS OF JAPAN vol. 017, no. 204 (P-1524), 21. April 1993 (1993-04-21) & JP 04 345133 A (TOYOTA MOTOR CORP), 1. Dezember 1992 (1992-12-01)

## Beschreibung

Die Erfindung betrifft Verbundfolien mit elektrisch schaltbaren optischen Eigenschaften aus lichtstreuenden Trägermaterialien auf der Basis elektrophoretisch mobiler Partikel in einer Suspensionsflüssigkeit.

Informationssysteme, wie z.B. Hinweisschilder, Werbetafeln, Preisschilder, Fahrplananzeigen, Computerdisplays oder allgemein Flachbildschirme dienen zur Darstellung von Texten, Symbolen oder Graphiken. Sie sollten auch bei Gegenlicht einen hohen Kontrast aurweisen, auch in spitzem Winkel lesbar sein und eine ausreichende eigene Leuchtkraft bzw. eine entsprechende externe Beleuchtung aurweisen. Die dargestellte Information kann fest, z.B. Werbeplakate oder elektronisch veränderbar, z.B. Computerdisplays sein.

Viele dieser Informationssysteme weisen keine eigene Leuchtkraft auf und sind extern, z.B. durch normales Tages- oder Raumlicht beleuchtet, wobei jedoch häufig eine Vordergrundbeleuchtung wegen der reflexfreien Ausleuchtung bevorzugt wird.

Eine wirtschaftlich besonders herausragende Anwendung für Informationssysteme sind Flachbildschirme, wie sie z.B. in tragbaren Computern, sogenannten Displays, eingesetzt werden. Flachbildschirme werden entweder mit selbstleuchtenden Anzeigen, die kein Beleuchtungssystem benötigen, oder mit nicht-selbstleuchtenden Anzeigen, die z.B. auf Basis von Flüssigkristallen oder elektrophoretischen Systemen arbeiten, hergestellt. Nichtselbstleuchtende Displays sind vereinfacht aus mindestens zwei Schichten aufgebaut: Eine Beleuchtungseinheit und eine Schicht, auf der die elektronisch veränderbare Information dargestellt werden kann, hier Visualisierungsschicht genannt. Die Beleuchtungseinheit kann als Hintergrund- oder Vordergrundbeleuchtung zum Einsatz kommen. Die Art der Beleuchtungseinheit wird in Abhängigkeit von der Transparenz und/oder dem Reflexionsvermögen der Visualisierungsschicht gewählt.

### Beschreibung der Beleuchtungseinheiten:

Die Beleuchtungseinheit muß für eine gute Ausleuchtung des Sichtfeldes mit einem möglichst hohen Kontrast sorgen. Dies kann häufig nur durch leistungsfähige Beleuchtungseinheiten erreicht werden. Für die Bereitstellung der dafür aufzubringenden Energie werden jedoch entsprechende leistungsstarke Batterien benötigt, die zur Zeit noch mit einer deutlichen Erhöhung des Gesamtgewichtes verbunden sind.

Beleuchtungseinheiten von modernen Computerdisplays verbrauchen häufig über 90 % der für den gesamten Bildschirm aufzuwendenden Energie. Bei den Hintergrundbeleuchtungssystemen für Flüssigkristall-Displays (LCD) wird z.B. durch die Polarisationsschichten ein erheblicher Anteil des erzeugten Lichtes weggefiltert und steht so für die Beleuchtung nicht zur Verfügung.

In vielen Fällen werden für Hintergrundbeleuchtungssysteme von Flüssigkristall-Displays (LCD) flächige Lampen oder eine Vielzahl von Lampen, mit entsprechenden Lichtdiffusorscheiben oder -gittern eingesetzt; andere Systeme gehen von einer Beleuchtungseinheit mit seitlicher Einstrahlung des Lichtes in eine Lichtleitplatte und entspechenden Reflektionseinheiten auf der Unterseite oder anregbaren Auskoppelpunkten auf der Oberseite der Lichtleitplatte aus. Diese Techniken können nur für Hintergrund-Beleuchtungssysteme und nicht für Vordergrund-Beleuchtungssysteme, die zwischen Visualisierungsschicht und Betrachter angeordnet sind, verwendet werden, da das ausgestrahlte Licht sowohl in Richtung des Betrachters als auch auf die Visualisierungsschicht abgestrahlt wird und es deshalb schwierig, wenn überhaupt möglich ist, die Darstellungen auf der Visualisierungsschicht zu erkennen.

Andere Displaytechniken verwenden flache und dünne elektrolumineszierende Lampen oder kleine Fluoreszenzeinheiten mit einer Streuvorrichtung. Die elektrolumineszierenden Lampen verbrauchen zwar weniger Energie als die Fluoreszenz-Hintergrundbeleuchtungssysteme, sind jedoch lichtschwächer und strahlen meist nicht das gesamte Lichtspektrum, das zum Betrieb von Farbbildschirmen benötigt wird, ab. Zudem ist die Lebensdauer der elektrolumineszierenden Lampen nicht zufriedenstellend.

### Beschreibung der Visualisierungsschicht

Eine neuartige Entwicklung zur Darstellung von elektronisch veränderbarer Information stellt die "elektronische Tinte" von Prof. J. Jacobson et al. dar. Diese Technik nutzt die Orientierung von ein- oder mehrfarbigen Pigmentpartikel in einem elektrischen Feld aus, um Bildinformation darzustellen. Details können z.B. in J. Jacobson et al., IBM System Journal 36, (1997), Seite 457-463 oder B. Comiskey et al., Nature, Vol. 394, July 1998, Seite 253-255 nachgelesen werden.

Zur Herstellung von entsprechenden bipolaren, ein- oder zweifarbigen Partikeln in verschiedenen Ausführungsformen und deren Anwendung in elektrophoristisch arbeitenden Displays kann z.B. auf WO 98/03896 verwiesen werden. Hier wird beschrieben, wie diese Partikel in einer inerten Flüssigkeit suspendiert und in kleinen Blasen eines Trägermaterials eingekapselt werden. Diese Technik erlaubt die makroskopische Anzeige von zwei Farben durch Rotation eines zweifarbigen Partikels je nach angelegtem elektrischen Feld.

In WO 98/19208 wird ein ähnliches elektrophoretisches Display beschrieben, wobei elektrophoretisch moblie Partikel in einer gegebenenfalls farbigen Flüssigkeit durch ein elektrisches Feld innerhalb einer Mikrokapsel bewegt werden können. Je nach Feldrichtung orientieren sich die Partikel zu einer Elektrode und stellen so makroskopisch eine ja/nein-Farbinformation (entweder ist die Farbe der Partikel oder die der Flüssigkeit sichtbar) dar.

WO 98/41899 offenbart elektrophoretische Displays, die zwar auf den oben beschriebenen Prizipien beruhen, jedoch entweder fluoreszierende oder reflektierende Partikel enthalten. Darüber hinaus ist auch die Verwendung einer Suspension mit flüssigkristallinem Verhalten beschrieben. Die Flüssigkristalle blockieren oder ermöglichen die elektrophoretische Migration der Partikel je nach angelegtem elektrischem Feld.

WO 98/41898 beschreibt ebenfalls ein solches elektrophoretisches Displaysystem, das durch seine spezielle Anordnung durch einen Druckvorgang, insbesondere durch Tintenstrahldrucktechnik, hergestellt werden kann. Vorteilhaft können sowohl die Elektroden als auch das elektrophoretische Display an sich in aufeinanderfolgenden Druckschritten hergestellt werden.
Es ist ein gemeinsames Merkmal dieser Techniken, das die Suspensionsflüssigkeit und die Partikel in Kapseln, Blasen oder sonstigen Kavitäten eines polymeren Materials eingebettet werden. Die Partikel können auch mit der Suspensionsflüssigkeit eingekapselt werden; diese Kapseln können dann entweder vorgefertigt in den Polymerisationsvorgang des Trägermaterials eingebracht werden oder in einer komplexen Emulsionspolymerisation gemeinsam mit dem Trägermaterial gebildet werden. In beiden Fällen liegen keine einheitliche Größe und Anordnung der Kapseln oder Kavitäten vor. Sowohl Größe als auch die zwei- bzw. dreidimensionale Verteilung der Mikrokapseln oder Kavitäten im Trägermaterial unterliegen einer schwer zu kontrollierenden Streubreite, die zum einen ein inhomogenes Ansteuerbild ergibt und zum anderen das Erreichen eines hohen Kontrasts schwierig machen kann.

Systeme dieser Art sind insbesondere für eine Hintergrundbeleuchtung nicht geeignet, da sie bauartbestimmt nahezu undurchscheinend sind. Erfolgt eine einfache Beleuchtung mit sichtbarem Licht in Aufsicht (Vordergrundbeleuchtung), so ist der Kontrast häufig unbefriedigend. Weiterhin ist durch die Verwendung von Auflichtsystemen d.h. mit einer externen Lichtquelle mit sichtbarem Licht die Gleichmäßigkeit der Ausleuchtung bei unverändert gutem Kontrast nur schwer zu realisieren.

Aufgabe der vorliegenden Erfindung war es, elektrophoretisch arbeitende Systeme zur Darstellung von Farben oder Informationen zu entwickeln, die eine hohe Leuchtkraft bzw. Kontrast bei gleichzeitig flacher Bauweise aufweisen. Das System sollte dünn und flexibel sein, um auch auf dreidimensionalen Objekten aufgebracht werden zu können.

Es wurde gefunden, daß ein Displaysystem, das elektrophoretisch mobile Partikel in Kavitäten einer lichtstreuenden Mikrokompartimentfolie verwendet, eine besonders hohe Leuchtkraft aufweist.

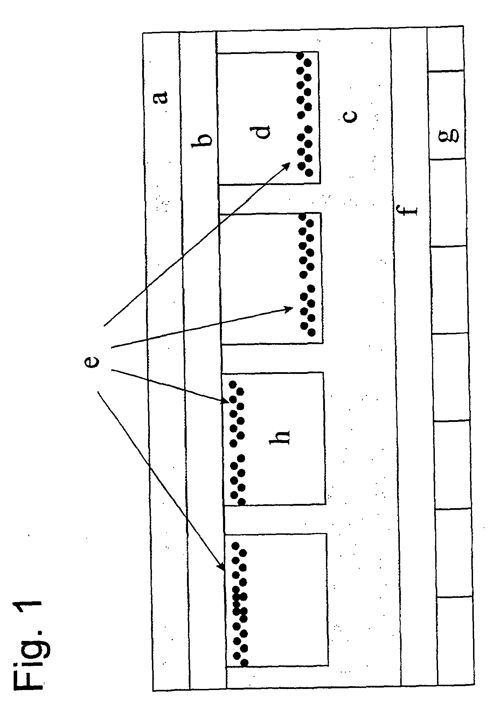

Gegenstand der vorliegenden Erfindung sind daher Verbundfolien mit elektrisch schaltbaren optischen Eigenschaften, die aus zwei Steuerelektroden und einer Mikrokompartimentfolie mit Kavitäten, die elektrophoretisch mobile Partikel in einer Suspensionsflüssigkeit enthalten, aufgebaut sind, wobei die Mikrokompartimentfolie aus einem lichtstreuenden Material besteht. Der Aufbau einer erfindungsgemäßen Verbundfolie mit elektrisch schaltbaren optischen Eigenschaften ist in Fig. 1 skizziert. In Fig. 1 bezeichnen
a) transparente Frontelektrode (Steuerelektrode)
b) transparente Abschlußfolie
c) lichtstreuende Mikrokompartimentfolie
d) Kavitäten mit Suspensionsflüssigkeit
e) elektrophoretisch mobile Partikel
f) Lichtleiterplatte-/folie (Beleuchtungseinheit), optional
g) Ansteuerelektrode (Steuerelektrode)

Die transparente Frontelektrode a) und die Abschlußfolie b) können identisch oder in umgekehrter Reihenfolge angeordnet sein. Sofern die Ansteuerelektrode g) optisch transparent ist, können g) und die Lichtleiterplatte f) auch vertauscht werden.

### Prinzipiell arbeiten die erfindungsgemäßen Verbundfolien wie folgt:

Das Licht der Lichtleiterplatte f) fällt durch die Mikrokompartimentfolie c) in die Kavitäten. Sind die elektrophoretisch mobilen Partikel durch das zwischen a) und g) angelegte elektrische Feld an der Abschlußfolie b) lokalisiert (z.B. in Kavität h) so tritt kein Licht aus der Kavität aus. Sind die Partikel an der Lichtleiterplatte lokalisiert (z.B. Kavität d), so kann das Licht ungehindert aus der Kavität austreten.

Die hohe Leuchtkraft der erfindungsgemäßen Verbundfolien mit elektrisch schaltbaren optischen Eigenschaften beruht auf dem lichtstreuenden Material der Mikrokompartimentfolie. Hierdurch werden Lichtverluste durch innere Totalreflexion vermieden.

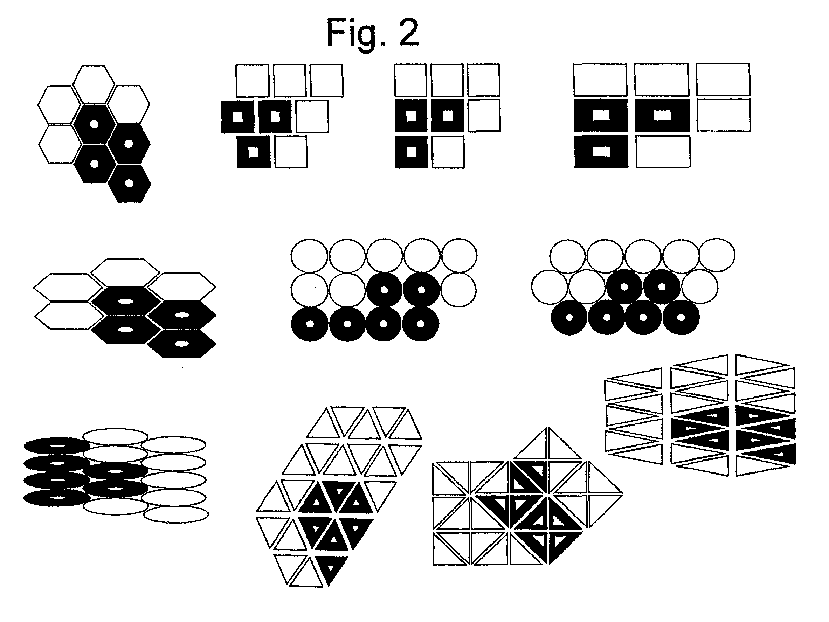

Die lichtstreuenden Eigenschaften der Mikrokompartimentfolie bzw. der Verbundfolie können durch eingebettete Streupartikel, so beschrieben in EP 0 645 420 oder EP 0 590 471 erreicht werden. Ein besonders geeignetes Material zur Herstellung der Mikrokompartimentfolie ist PLEXIGLAS GS Clear 1001 oder 2458 der Fa. Röhm GmbH, Darmstadt.
Die Anordnung der Kavitäten in der Mikrokompartimentfolie bzw. Verbundfolie sollte streng regelmäßig sein. Es bietet sich eine Anordnung in Spalten oder Reihen an. Diese Anordnung muß jedoch nicht notwendigerweise rechtwinklig oder gar quadratisch sein, auch z.B. schräge Anordnung der Zeilen und Spalten oder hexagonale Anordnungen der Kavitäten sind möglich. Fig. 2 zeigt eine beispielhafte Auswahl.

Die Kavitäten können z. B. durch Nadeln, Prägen, 3D-Drucken, Erodieren, Ätzen, Abformen mit Gießmassen, Spritzguß, fotografische oder photolithographische Verfahren oder Interferenzmethoden in ein Trägermaterial bzw. in die Mikrokompartimentfolie gebracht werden. Wie solche mikrostrukturierten Oberflächen hergestellt werden können, ist z.B. in DE 29 29 313, WO 97/06468, US 4 512 848, DE 41 35 676, WO 97/13633 oder EP 0 580 052 beschrieben. Eine weitere Methode zur Herstellung kleiner Strukturen beschreiben Younan Xia und George M. Whitesides in Angew. Chem. 1998, 110 568-594. Diese "Softlithographie" genannten Methoden ermöglichen die Herstellung von sehr kleinen Strukturen im Bereich unterhalb von 1 µm bis ca. 35 nm. Eine weitere Methode ist das Mikrofräsen eines Masters, mit dem Platten oder Folien mit der gewünschten Mikrostruktur hergestellt werden können. Der Master stellt eine Negativform dar. Diese kann dann in einem Präge-, Guß- oder Spritzgußverfahren abgeformt werden.

Alternativ kann auch eine unstrukturierte Folie mit Kavitäten der gewünschten Dimensionen und Formen versehen werden. Hier bieten sich ebenfalls erodierende oder spahnende Methoden wie Laserstrahlung oder Bohren/Fräsen z.B. mit einer CNC-Maschine an.

Das Trägermaterial der Kavitäten sollte optisch transparent sein und kann farblos oder gefärbt sein. Die Steuerelektroden sind jeweils über- und unterhalb der Kavitäten an der Mikrokompartimentfolie angebracht, wobei die oberhalb der Kavitäten angeordnete d. h. zwischen dem Betrachter und der Kavität liegende Elektrode (a in Fig. 1) ebenso transparent wie das Trägermaterial sein sollte. Die unterhalb den Kavitäten angebrachte Steuerelektrode (g in Fig. 1) kann auch, um die Spannungen der Elektroden gering zu halten, zwischen der Beleuchtungseinheit (f in Fig. 1) und den Kavitäten angebracht werden und sollte dann optisch transparent sein.

Als Trägermaterial eignen sich für die Mikrokompartimentfolie alle mechanisch oder lithographisch bearbeitbaren Polymere wie beispielsweise Thermoplaste, Polycarbonate, Polyurethane, Polysiloxane, Polyolefine wie z.B. Polyethylen, Polypropylen, COC (Cyclo-Olefinische Copolymere), Polystyrol, ABS-Polymerisate, PMMA, PVC, Polyester, Polyamide, thermoplastische Elastomere oder vernetzende Werkstoffe, wie UV-härtende Acrylatlacke, aber auch Polytetrafluorethylen, Polyvinylidenfluorid oder Polymere aus Perfluoralkyoxyverbindungen, sei es als Homo- oder Copolymer oder als Mischungsbestandteil eines Polymerblends. Durch Verwendung eines flexiblen Materials für die Mikrokompartimentfolie ist es möglich, die erfindungsgemäßen Verbundfolien mit elektrisch schaltbaren optischen Eigenschaften flexibel auszuführen.

Die Kavitäten der Mikrokompartimentfolie können, abgesehen vom Tiefenverlauf in der Aufsicht, jede beliebige Form aufweisen. Figur 2 zeigt eine Auswahl. Zweckmäßig besitzen die Kavitäten an der dem Auge des Betrachters zugewendeten Seite (Aufsichtfläche) eine runde, ovale, dreieckige, rechteckige, quadratische, sechseckige oder achteckige Fläche.

Die Aufsichtfläche der Kavitäten sollte größer als 10 000 µm², bevorzugt größer als 40 000 µm², besonders bevorzugt größer als 62 500 µm² und ganz besonders bevorzugt größer als 250 000 µm² sein.

Die Tiefe der Kavitäten kann, unabhängig von der sichtbaren Fläche, zwischen 20 und 250 µm, bevorzugt zwischen 30 und 200 µm, ganz besonders bevorzugt 50 bis 100 µm betragen.

Der Tiefenverlauf der Kavitäten kann gleichmäßig, d.h. die Breite der Kavitäten kann an jeder Stelle gleich groß sein.

In einer anderen Ausführungsform der vorliegenden Erfindung besitzen die Kavitäten einen konischen oder kegelartigen Tiefenverlauf, wobei das Verhältnis der Aufsichtfläche der Kavitäten zur Grundfläche größer als 1.5 ist.

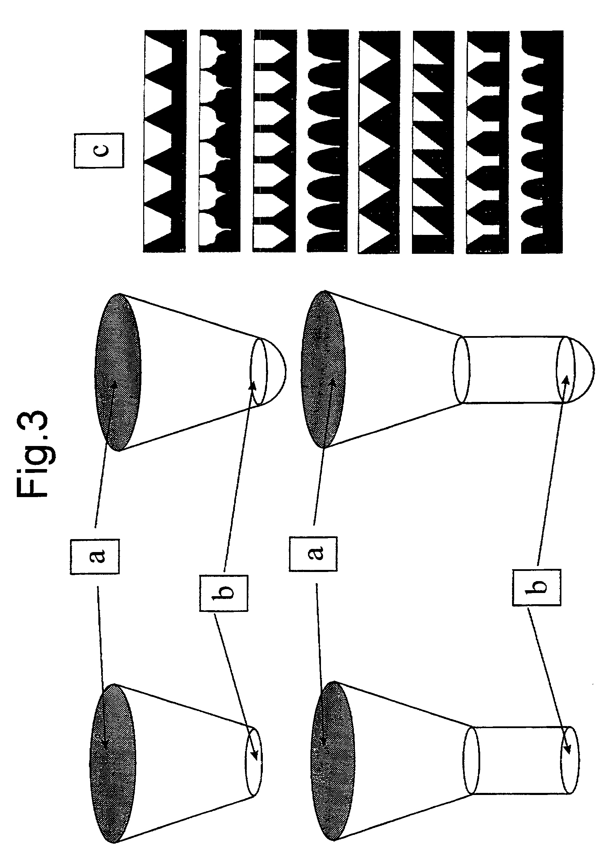

Der konische oder kegelartige Tiefenverlauf der Kavitäten ist in Fig. 3 skizziert. Es ist ein besonderes Merkmal dieser Ausführungsform der vorliegenden Erfindung, das die dem Auge des Betrachters zugewendete Seite der Kavitäten ("Aufsichtfläche", a in Fig. 3) größer ist, als die abgewendete ("Grundfläche", b in Fig. 3). Das Verhältnis von Aufsichtfläche zu Grundfläche der Kavitäten sollte größer als 1,5, bevorzugt größer 25, besonders bevorzugt größer 100, ganz besonders bevorzugt größer 250 sein. Fig. 3, c zeigt eine beispielhafte Auswahl von Tiefenverläufen.

Die Stegbreiten zwischen den einzelnen Kavitäten an der Oberseite der Mikrokompartimentfolie sollten so gering wie möglich gehalten werden; bevorzugt sind Stege mit einer Breite von 2 - 50 µm, besonders bevorzugt 5 - 25 µm. Die Stegoberseiten können lichtundurchlässig beschichtet werden. Dies verhindert den unerwünschten Lichtaustritt aus den Stegen, wenn der Lichtaustritt über die Kavitäten durch die Partikel blockiert ist.

Zur Vermeidung von Lichtverlusten können die Stegoberseiten und/oder die Lichtleiterplatte verspiegelt oder mit einem reflektierenden Material beschichtet werden. So kann z. B. eine Aluminium-Kaschierung, Metallbedampfung oder eine TiO₂-Beschichtung vorgenommen werden.

Nachdem die Mikrokompartimentfolie mit den gewünschten Kavitäten ausgerüstet worden ist, werden die Kavitäten mit den elektrophoretisch mobilen Partikeln und der Suspensionsflüssigkeit gefüllt. Dies kann z.B. mittels durch Einschlämmen und Abrakeln der überschüssigen Suspension, durch direktes Einrakeln/Einstreichen der Suspension, mittels Tintenstrahltechnik in einem Druckvorgang oder durch Selbstfüllung mittels Kapillarkräfte erfolgen. Durch diese Maßnahmen werden die Partikelsuspensionen direkt in Kavitäten eingebracht. Die Kavitäten müssen anschließend verkapselt oder versiegelt werden. Bei der Füllung mittels Kapillarkräften sind die Kapseln notwendigerweise vor dem Füllvorgang verschlossen. Zweckmäßig erfolgt dies mit einer Deckfolie, die dicht mit der Mikrokompartimentfolie bzw. mit den Stegen der Kavitäten verbunden wird. Zur Versiegelung der Kavitäten können diverse Möglichkeiten zum Einsatz kommen, wie z.B.:
- Verkleben oder thermisches Verschmelzen (Mikrowellenerwärmung, Kontakt- oder Reibschweißen, Schmelzkleber, Heißlaminierung)
- Reaktivharze, insbesondere UV-härtend (z.B. Acrylat-Dispersionen) oder 2-Komponenten-Systeme (z.B. Polyurethan-Lacksysteme), die sich nicht mit der Pigmentsuspension mischen,
- Grenzflächenpolymerisation, Grenzflächenpolykondensation und andere Verfahren, die z.B. auch im Bereich der Mikroverkapselungstechnologien angewandt werden, wie z.B. in "Microencapsulation : methods and industrial applications / Ed. S.Benita / Marcel Dekker, Inc. NY /1996" für die Verkapselung spherischer Partikel beschrieben.

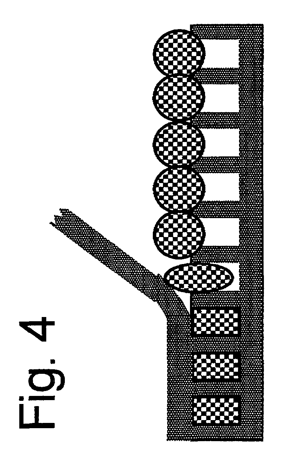

Es können auch bereits verkapselte Suspensionen von elektrophoretisch mobilen Partikeln d.h. vorbereitete Kapseln eingesetzt werden. Diese vorbereiteten Kapseln können, wie in Fig. 4 gezeigt, in die Kavitäten der Mikrokompartimentfolie eingepreßt oder eingedrückt werden. Die so gefüllten Kavitäten müssen anschließend wieder, wie bereits beschrieben, mit einer Deckfolie versiegelt werden. Diese Technik vermindert bei angepaßtem Verhältnis zwischen Kapselgröße und Mikrokompartiment-Größe die Anforderungen an die Stabilität des Kapselwandmaterials für den praktischen Gebrauch deutlich, da die Kapseln durch die Stege der Mikrokompartimentfolie umschlossen werden. Weiterhin erzwingt die Einordnung der Kapseln in die vorbereiteten Kavitäten eine regelmäßige Anordnung der Kapseln.

Wichtig bei beiden Varianten ist, daß bei der Versiegelung möglichst keine Luft- oder sonstigen Gaseinschlüsse erfolgen, keine Reaktionen zwischen dem Suspensionsmedium oder den Mikropartikeln der Suspension und der Kapselschicht auftreten und daß keine Leckagen zur Umgebung bzw. Verbindungen zwischen den einzelnen Kavitäten existieren.

Die Kavitäten bzw. die vorbereiteten Kapseln können mit einer Suspension oder mit mehreren Suspensionen, z.B. Suspensionen mit unterschiedlicher Farbgebung bei Umpolung des angelegten elektrischen Feldes, gefüllt werden.

Weiterhin ist es möglich, auf eine Farbgebung durch die Suspension zu verzichten, d.h. die Kavitäten neben den Partikeln mit einer optisch transparenten und farblosen Suspensionsflüssigkeit zu füllen. Als optisch transparente Flüssigkeit eignen sich z.B. unpolare organische Flüssigkeiten wie Paraffin- oder Isoparaffin-Öle, niedermolekulare oder niedrigviskose Silikon-Öle.

Die Suspensionsflüssigkeiten können weiterhin optisch transparent und gefärbt sein. Zur Herstellung von mehrfarbigen Displays können drei benachbarte Kavitäten unterschiedlich (z.B. rot, blau, gelb) gefärbte Suspensionsflüssigkeiten enthalten.

Es ist weiterhin möglich, Suspension mit einem negativen elektrorheologischen Effekt einzusetzen.

Mit Hilfe von Suspension mit einem negativen elektrorheologischen Effekt werden bistabile Verbundfolien erhalten. Bei Anlegen eines elektrischen Feldes orientieren sich die elektrophoretisch mobilen Partikel gemäß ihrer Ladung im Feld, d. h. der äußere Betrachter nimmt entweder die Farbe der Partikel oder die der Suspensionsflüssigkeit wahr. Die Partikel können sich bei angelegten elektrischem Feld ungehindert in der Suspension bewegen. Wird das elektrische Feld entfernt, so steigt die Viskosität der elektrorheologischen Suspension stark an und die Partikel werden in ihrem gerade eingenommenen Ordnungszustand weitgehend fixiert. Die dargestellte Information wird entsprechend ebenso fixiert, so dass diese auch ohne äußeres elektrisches Feld stabil erkennbar bleibt.

Gefärbte Suspensionen müssen eine lichtechte Farbe aufweisen und dürfen keine Reaktionen mit dem Material der MikrokompartimentfoIie oder der Deckschicht eingehen. Sie können weiterhin fluoreszierende oder phosphoreszierende Substanzen enthalten. Die Verwendung von fluoreszierenden oder phosphoreszierenden Substanzen ermöglich eine höhere Lichtausbeute, und/oder den Einsatz von Lichtquellen mit einem UV-Strahlenanteil. Geeignet sind z.B. Cumarin 314T (Fa. Acros Organics) oder Pyromethene 580.

Die Herstellung der zwischen 0,1 und 20 µm, bevorzugt zwischen 0,3 und 10 µm, besonders bevorzugt zwischen 0,4 und 5 µm im Durchmesser betragenden elektrophoretisch mobilen Partikel kann in Anlehnung an WO 98/41898, WO 98/41899 oder WO 98/03896 erfolgen. Dies beeinhaltet die Umhüllung der Pigmente mit organischen und/oder polymeren Materialien und/oder die Verwendung der reinen Pigmente, die z.B. durch Behandlung von ladungskontrollierenden Additiven (siehe insbesondere WO 98/41899) mit elektrischen Ladungen versehen worden sind.

Die Partikel müssen in der Suspensionsflüssigkeit frei beweglich sein, so daß sich die Partikel aufgrund ihrer Ladung je nach angelegtem elektrischen Feld zu einer der Elektroden bewegen können. Der "Aus"/"Ein"-Zustand einer Kavität bzw. die makroskopisch wahrnehmbare Farbe der Kavitäten ist daher durch die räumliche Anordnung der Partikel bestimmt und kann durch das elektrische Feld gesteuert werden.

Sind die Partikel durch das elektrische Feld an der dem Betrachter abgewendeten Seite der Kavitäten (Grundseite, "b" in Fig. 3) lokalisiert, so sind die Partikel für den Betrachter nicht oder nur wenig sichtbar, und das Licht der Beleuchtungseinheit kann nahezu ungehindert durch die Suspensionsflüssigkeit durchtreten (z.B. Fig. 1, Kavität d). Sind die Partikel dagegen an der dem Betrachter zugewandten Seite der Kavitäten lokalisiert (Aufsichtseite, "a" in Fig. 3), schirmen diese das Licht der Beleuchtungseinheit ab (z.B. Fig. 1, Kavität h). Es resultiert eine dunkle Fläche, wobei das Licht nur noch durch die Stege des Trägermaterials austreten kann. Die Stege der Mikrokompartimentfolie sollten daher so dünn wie möglich ausgeführt werden und/oder eine lichtundurchlässige bzw. verspiegelte Beschichtung aufweisen.

Zur Ansteuerung der Kavitäten bzw. der Partikel sind zwei Elektroden (b und g in Fig. 1), von denen zumindest die Elektrode der Grundfläche (g in Fig. 1) dem Licht der Beleuchtungsschicht gegenüber weitgehend transparent sein sollte.

Die Ansteuerung der Elektroden, d. h. im Extremfall die Adressierung von einzelnen Kavitäten kann z.B. durch eine Reihen-/Spaltenanordnung von Schaltereinheiten gemäß WO 97/04398 erfolgen. Sind die Kavitäten für eine Einzelansteuerung zu klein, so werden mehrere Kavitäten pro Schaltereinheit geschaltet.

Die optionale Beleuchtungseinheit (f in Fig. 1) sollte eine gleichmäßige Ausleuchtung der Verbundfolien mit elektrisch schaltbaren optischen Eigenschaften ermöglichen, aber dennoch flach sein. Hier bietet sich der Einsatz von seitlich angebrachten Lichtquellen an, deren Licht durch eine Lichtleiterplatte über das gesamte Sichtfeld verteilt wird. Stark lichtstreuende Kunststoffplatten werden z.B. in EP 0 645 420 offenbart. Diese Platten sind in einer Weise aufgebaut, daß die innere Totalreflexion des eingestrahlten Lichts vermieden und statt dessen eine Beugung des Lichts aus der Platte bzw. aus der Mikrokompartimentfolie heraus ermöglicht wird. Weitere Ausführungsbeispiele zu Lichtleiterplatten finden sich in EP-0 645 420 und EP-0 590 471. Diese Beleuchtungssysteme werden z.B. für hintergrundbeleuchtete Hinweisschilder eingesetzt. In einer besonderen Ausführungsform der vorliegenden Erfindung ist das Material der Lichtleiterplatte und der Mikrokompartimentfolie identisch.

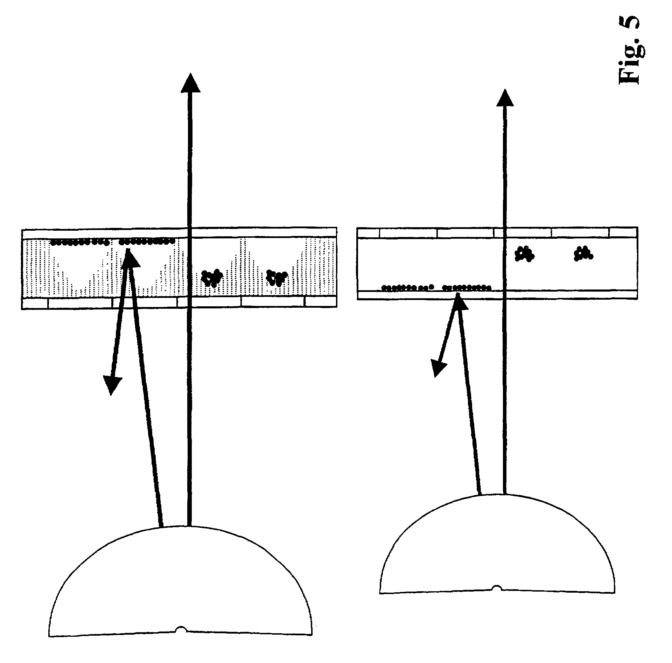

Die optionale Beleuchtungseinheit kann bei Aufbringen der Verbundfolie auf einen beleuchteten Hintergrund, der dann als Lichtquelle genutzt wird (Backlightvorrichtung), weggelassen werden (Fig. 5). Wird die Verbundfolie als Dimmvorrichtung, d. h. bei Umschalten eines transparenten zu einem nicht-transparenten Zustand genutzt, ist eine Beleuchtungseinheit ebenfalls nicht erforderlich.

Geeignete Lichtleiterplatten oder Streuplatten enthalten farblose, aber unterschiedlich lichtbrechende Partikel in einem farblosem Matrixmaterial. Dadurch wird die Ausbreitungsrichtung der in die Platte eintretenden Lichtstrahlen stetig geringfügig geändert und es erfolgt ein über die Plattenoberfläche gleichmäßig verteilter Lichtaustritt unter sehr kleinem Winkel. Zweckmäßigerweise werden solche Lichtleiterplatten von einer Kante beleuchtet, so daß durch die Lichtbrechung eine gleichmäßige Lichtabstrahlung über die Plattenoberflächen erhalten wird.

Um eine gleichmäßige Leuchtdichte zu erreichen, kann an mehreren Kanten der Beleuchtungseinheit Licht eingestrahlt werden.

Die erfindungsgemäßen Verbundfolien mit elektrisch schaltbaren optischen Eigenschaften können für alle Anzeigefunktionen verwendet werden, bei denen es auf eine flache Ausführungsform und/oder eine hohe Leuchtkraft ankommt. Beispiele für solche Verwendungen sind z.B. Anzeigetafeln, Handydisplays, Computer, Flachbildschirme, Schilder oder Signaltafeln. Weiterhin können die erfindungsgemäßen Verbundfolien zur Herstellung von Fensterscheiben, Abdeckungen, Gewächshausdächern, Verpackungen, Textilien, Brillen, Scheinwerferabdeckungen, Windschutzscheiben, Signalen oder Sonnenschutzvorrichtungen verwendet werden.

## Patentansprüche

1. Verbundfolien mit elektrisch schaltbaren optischen Eigenschaften, aufgebaut aus zwei Steuerelektroden (a, g) und einer Mikrokompartimentfolie (c) mit Kavitäten (h), die elektrophoretisch mobile Partikel in einer Suspensionsflüssigkeit enthalten,
**dadurch gekennzeichnet,**
**daß** die Mikrokompartimentfolie aus einem lichtstreuenden Material besteht.

2. Verbundfolien nach Anspruch 1,
**dadurch gekennzeichnet,**
**daß** die Suspensionsflüssigkeit optisch transparent und farblos ist.

3. Verbundfolien nach Anspruch 1,
**dadurch gekennzeichnet,**
**daß** die Suspensionsflüssigkeit optisch transparent und gefärbt ist.

4. Verbundfolien nach Anspruch 3,
**dadurch gekennzeichnet,**
**daß** je drei benachbarte Kavitäten unterschiedlich gefärbte Suspensionsflüssigkeiten enthalten.

5. Verbundfolien nach einem der Ansprüche 1 bis 4,
**dadurch gekennzeichnet,**
**daß** die Kavitäten einen konischen oder kegelartigen Tiefenverlauf zeigen, wobei das Verhältnis der Aufsichtfläche der Kavitäten zu deren Grundfläche größer 1.5 ist.

6. Verbundfolien nach einem der Ansprüche 1 bis 5,
**dadurch gekennzeichnet,**
**daß** die Aufsichtfläche der Kavitäten größer als 10 000 µm² ist.

7. Verbundfolien nach Anspruch 6,
**dadurch gekennzeichnet,**
**daß** die Aufsichtfläche der Kavitäten größer als 250 000 µm² ist.

8. Verbundfolien nach einem der Ansprüche 1 bis 7,
**dadurch gekennzeichnet,**
**daß** die Kavitäten eine Tiefe von 20 bis 250 µm aufweisen.

9. Verbundfolien nach Anspruch 8,
**dadurch gekennzeichnet,**
**daß** die Kavitäten eine Tiefe von 30 bis 200 µm aufweisen.

10. Verbundfolien nach einem der Ansprüche 1 bis 9,
**dadurch gekennzeichnet,**
**daß** die Kavitäten in der Mikrokompartimentfolie an der Oberseite durch Stege mit einer Breite von 2 bis 50 µm von einander getrennt sind.

11. Verbundfolien nach Anspruch 10,
**dadurch gekennzeichnet,**
**daß** die Kavitäten in der Mikrokompartimentfolie an der Oberseite durch Stege mit einer Breite von 2 bis 25 µm von einander getrennt sind.

12. Verbundfolien nach Anspruch 10,
**dadurch gekennzeichnet,**
**daß** die Stegoberseite der Mikrokompartimentfolie lichtundurchlässig beschichtet sind.

13. Verfahren zu Herstellung von Verbundfolien mit elektrisch schaltbaren optischen Eigenschaften nach einem der Ansprüche 1 bis 12,
**dadurch gekennzeichnet,**
**daß** die Kavitäten in der Mikrokompartimentfolie durch erodierende oder spahnende Verfahren erzeugt werden.

14. Verfahren nach Anspruch 13,
**dadurch gekennzeichnet,**
**daß** die Kavitäten in der Mikrokompartimentfolie durch erodierende Laserstrahlung erzeugt werden.

15. Verwendung der Verbundfolien mit elektrisch schaltbaren optischen Eigenschaften nach einem der Ansprüche 1 bis 12 für Computerdisplays, Flachbildschirme, Schilder, Signaltafeln oder Anzeigetafeln.

16. Verwendung der Verbundfolien mit elektrisch schaltbaren optischen Eigenschaften gemäß einem der Ansprüche 1 bis 12 zur Herstellung von Fensterscheiben, Abdeckungen, Gewächtshausdächern, Verpackungen, Textilien, Brillen, Scheinwerferabdeckungen, Windschutzschreiben, Signalen oder Sonnenschutzvorrichtungen.

## Claims

1. A composite film having electrically switchable optical properties, constructed from two control electrodes (a, g) and a microcompartment film (c) having cavities (h) containing electrophoretically mobile particles in a suspension liquid, **characterized in that** the microcompartment film consists of a light-scattering material.

2. A composite film according to claim 1, **characterized in that** the suspension liquid is optically transparent and colourless.

3. A composite film according to claim 1, **characterized in that** the suspension liquid is optically transparent and coloured.

4. A composite film according to claim 3, **characterized in that** each three adjacent cavities contain differently coloured suspension liquids.

5. A composite film according to any one of claims 1 to 4, **characterized in that** the cavities have a conical or cone-like depth profile, the ratio between the visible area of the cavities and their base area being greater than 1.5.

6. A composite film according to any one of claims 1 to 5, **characterized in that** the visible area of the cavities is greater than 10,000 µm²

7. A composite film according to claim 6, **characterized in that** the visible area of the cavities is greater than 250,000 µm².

8. A composite film according to any one of claims 1 to 7, **characterized in that** the cavities have a depth of from 20 to 250 µm.

9. A composite film according to claim 8, **characterized in that** the cavities have a depth of from 30 to 200 µm.

10. A composite film according to any one of claims 1 to 9, **characterized in that** the cavities in the microcompartment film are separated from one another at the upper side by lands having a width of 2 to 50 µm.

11. A composite film according to claim 10, **characterized in that** the cavities in the microcompartment film are separated from one another at the upper side by lands having a width of from 2 to 25 µm.

12. A composite film according to claim 10, **characterized in that** the land upper side of the microcompartment film is provided with an opaque coating.

13. A process for the production of a composite film having electrically switchable optical properties according to any one of claims 1 to 12, **characterized in that** the cavities in the microcompartment film are produced by erosive or cutting processes.

14. A process according to claim 13, **characterized in that** the cavities in the microcompartment film are produced by erosive laser radiation.

15. The use of a composite film having electrically switchable optical properties according to any one of claims 1 to 12 for computer displays, flat-panel display screens, signs, signal boards or display boards.

16. The use of a composite film having electrically switchable optical properties according to any one of claims 1 to 12 for the production of window panes, covers, greenhouse roofs, packaging, textiles, spectacles, headlamp covers, windscreens, signals or sun-protection devices.

## Revendications

1. Feuilles composées ayant des propriétés optiques commutables électriquement, constituées d'électrodes de contrôle (a, g) et d'une feuille de micro compartiment (c) ayant des cavités (h) qui renferment des particules mobiles par électrophorèse, dans un liquide de suspension,
**caractérisées en ce que**
la feuille de microcompartiment (c) est en matériau à dispersion de lumière.

2. Feuilles composées selon la revendication 1,
**caractérisées en ce que**
le liquide de suspension est transparent d'un point de vue optique et est incolore.

3. Feuilles composées selon la revendication 1,
**caractérisées en ce que**
le liquide de suspension est transparent d'un point de vue optique et est coloré.

4. Feuilles composées selon la revendication 3,
**caractérisées en ce que**
trois cavités voisines contiennent des liquides de suspension différemment colorés.

5. Feuilles composées selon l'une des revendications 1 à 4,
**caractérisées en ce que**
les cavités montrent un développement en profondeur conique ou du type conique dans lequel le rapport des faces de surveillance des cavités à leur surface de base, est supérieur à 1,5.

6. Feuilles composées selon une des revendications 1 à 5,
**caractérisées en ce que**
la surface de surveillance des cavités est supérieure à 10 000 µm².

7. Feuilles composées selon la revendication 6,
**caractérisées en ce que**
la surface de surveillance des cavités est supérieure à 250 000 µm².

8. Feuilles composées selon l'une des revendications 1 à 7,
**caractérisées en ce que**
les cavités possèdent une profondeur de 20 à 250 µm.

9. Feuilles composées selon la revendication 8,
**caractérisées en ce que**
les cavités possèdent une profondeur de 30 à 200 µm.

10. Feuilles composées selon l'une des revendications 1 à 9,
**caractérisées en ce que**
les cavités dans les feuilles de micro-compartiment à la surface supérieure sont séparées les unes des autres par des nervures ayant une largeur de 2 à 50 µm.

11. Feuilles d'assemblage selon la revendication 10,
**caractérisées en ce que**
les cavités dans les feuilles de micro compartiment à la surface supérieure sont séparées les unes des autres par des nervures ayant une largeur de 2 à 25 µm.

12. Feuilles composées selon la revendication 10,
**caractérisées en ce que**
les faces supérieures des nervures de la feuille de micro compartiment sont revêtues d'une manière non translucide.

13. Procédé de production de feuilles composées ayant des propriétés optiques commutables électriquement selon l'une des revendications 1 à 12,
**caractérisé en ce que**
les cavités dans la feuille de micro compartiment sont produites par un procédé d'érosion ou de détachement de copeaux.

14. Procédé selon la revendication 13,
**caractérisé en ce que**
les cavités dans la feuille de micro compartiment sont produites par un rayonnement laser à érosion.

15. Utilisation des feuilles d'assemblage ayant des propriétés optiques commutables électriquement selon l'une des revendications 1 à 12, pour des écrans d'ordinateur, pour des écrans plats, pour des plaques, pour des tableaux de signalisation ou des tableaux d'affichage.

16. Utilisation des feuilles ayant des propriétés optiques électriquement conformément à l'une des revendications 1 à 12, pour la production de vitrages pour fenêtres, de recouvrements, de toitures de serre, d'emballages, de textiles, de lunettes, de recouvrements de phare, de pare-brise, de signalisations ou de dispositifs de protection contre le soleil.
